(19) Europäisches Patentamt / European Patent Office / Office européen des brevets

(11) **EP 2 107 410 A2**

(12) **EUROPEAN PATENT APPLICATION**

(43) Date of publication:
**07.10.2009 Bulletin 2009/41**

(51) Int Cl.:
***G02B 26/10*** *(2006.01)*

(21) Application number: **08167642.1**

(22) Date of filing: **27.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.04.2008 KR 20080031382**

(71) Applicant: **Samsung Electronics Co., Ltd.**
**Suwon-si,**
**Gyeonggi-do 442-742 (KR)**

(72) Inventors:
• **Choi, Woo-seok**
  **Seoul (KR)**
• **Jeong, Taek-Seong**
  **Suwon-si (KR)**

(74) Representative: **Waddington, Richard**
**Appleyard Lees**
**15 Clare Road**
**Halifax, Yorkshire HX1 2HY (GB)**

(54) **Optical scanning apparatus and image forming apparatus including the same**

(57)    An optical deflector (20) includes a driving mirror (14), which is driven to rotate and has a deflecting surface for deflecting an incident light. Gratings (16) are formed on the deflecting surface, each grating having a shape that makes the intensities of light beams diffracted at a positive order and a negative order different from each other. A main scanning line (S) formed by a trace of the deflected light according to the rotation of the driving mirror (14) is a straight line. The optical deflector (20) is used in an optical scanning apparatus with a light source. The optical scanning apparatus is utilized in an image forming apparatus for forming an electrostatic latent image onto an exposure object.

FIG. 1

## Description

### TECHNICAL FIELD

The present disclosure relates to an optical scanning apparatus for scanning light irradiated from a light source to an exposure object and to an image forming apparatus that includes the optical scanning apparatus.

### BACKGROUND

Optical scanning apparatuses for scanning light irradiated from a light source to an exposure object are generally employed in electro-photographic image forming apparatuses, such as copying machines, printers, and facsimiles, or the like that reproduce images on printing media.

An optical scanning apparatus may include a light source, a pre-scan optical system, an optical deflector, and a scanning optical system. The light source irradiates the light according to image signals, and the irradiated light is shaped as parallel light having a predetermined beam diameter or slightly convergent light while passing through the pre-scan optical system. The light is then incident on the optical deflector. The light incident on the optical deflector is deflected and scanned onto the scanning optical system according to an operation of the optical deflector, and is, then, focused on an exposure object surface after an aberration of the light is compensated while passing through the scanning optical system.

A polygon mirror apparatus, in which a polygon mirror having a plurality of mirror surfaces is mounted to be rotated by, e.g., a spindle motor, is generally used as the optical deflector. In response to the continued demands for higher speed image forming, recently, various attempts to utilize a vibration type micro-mirror device as the optical deflector in order to realize a higher scanning speed are being made.

When the light incident on the mirror surface of the optical deflector is reflected and scanned along a main scanning direction on an exposure object surface, the incident light and the reflected light exist on the same plane as that of the main scanning direction. In order to prevent the incident light and the reflected light from interfering with each other, the incident light is incident onto the mirror surface to be inclined at a predetermined angle. The predetermined incident angle should be larger than a unilateral scanning angle ($\alpha$), resulting in the length of the mirror surface in the main scanning direction to be $D/\cos\alpha$ or longer when the beam diameter of the incident light is D. When the size of the mirror increases, the moment of inertia increases, which requires a greater driving force to rotate the optical deflector. Therefore, it is desirable to design a small-sized mirror surface.

## SUMMARY

The present disclosure provides an optical scanning apparatus, which includes an optical deflector capable of realizing a reduced mirror surface. An image forming apparatus adopting the optical scanning apparatus is also disclosed.

According to the present invention there is provided an apparatus and method as set forth in the appended claims. Other features of the invention will be apparent from the dependent claims, and the description which follows.

According to one aspect, an optical deflector may include: a driving mirror configured to rotate, the driving mirror having a deflecting surface for deflecting an incident light, and a plurality of gratings formed on the deflecting surface for diffracting the incident light, each of the one or more gratings having a shape such that respective intensities of light diffracted at a positive order and a negative order are different from each other. A main scanning line, formed by the trace of the deflected light resulting from the rotation of the driving mirror, may be substantially a straight line.

According to another aspect, an optical scanning apparatus may include: a light source configured to produce light; and an optical deflector, which nay include a deflecting surface that is rotatably driven to deflect a light received from the light source. The light incident on the deflecting surface may be perpendicular to a main scanning line that is formed by a trace of the light deflected by the optical deflector as the same rotates, and may form an angle $\theta$ ($\theta\neq0$) in a sub-scanning direction, which is perpendicular to the main scanning line, with a line normal to the deflecting surface when the deflecting surface is in a neutralized position. A main scanning line, formed by the trace of the deflected light resulting from the rotation of the driving mirror, may be substantially a straight line.

According to another aspect, an optical scanning apparatus may include: a light source configured to produce light; a pre-scan optical unit arranged to receive the light from the light source, the pre-scan optical unit being configured to shape the light received from the light source into a predetermined shape; an optical deflector including a deflecting surface that is rotatably driven, the optical deflector being configured to deflect the light received from the pre-scan optical unit; and a scanning optical unit arranged to receive the deflected light from the optical deflector, the scanning optical unit being configured to compensate for an aberration of the light deflected by the optical deflector so as to focus the light onto an exposure object. The light incident on the deflecting surface may be parallel to a line normal to the deflecting surface when the deflecting surface is in a neutralized position, and may form an angle $\beta$ ($\beta\neq0$) with an optical axis of the scanning optical unit.

According to another aspect, an image forming apparatus may include: a photosensitive object; for irradiating light onto the photosensitive object to form an electrostatic latent image; and a developing unit supplying toner to the electrostatic latent image formed on the photosensitive object so as to develop the electrostatic latent image on the photosensitive object.

According to another aspect, an optical deflector device may comprise a driving mirror configured to rotate, the driving mirror having a deflecting surface for deflecting an incident light incident thereupon; and a plurality of diffraction gratings formed on the deflecting surface, the plurality of diffraction gratings being arranged such that an $m^{th}$-order diffraction of the incident light is deflected in a direction substantially perpendicular to the deflecting surface, m being a non-zero integer.

The plurality of diffraction gratings may be arranged to satisfy: $\pm m \cdot \lambda = p \cdot \sin(\theta_D)$, where $\lambda$ is the wavelength of the incident light, p is the distance between adjacent ones of the plurality of diffraction gratings, and $\theta_D$ is the angle of diffraction of the $m^{th}$-order diffraction of the incident light.

The plurality of diffraction gratings may be arranged such that the $m^{th}$-order diffraction of the incident light has its light intensity greater than that of any other order diffraction of incident light by the plurality of diffraction gratings.

According to another aspect, an optical scanning apparatus for scanning light across a main scanning line on an exposure object may comprise a light source configured to produce light; and an optical deflector unit and a scanning optical unit arranged between the optical deflector unit and the exposure object to receive the deflected light from the optical deflector unit, the scanning optical unit being configured to focus the light onto the exposure object. The optical deflector unit may comprise: a driving mirror configured to rotate, the driving mirror having a deflecting surface for deflecting an incident light incident thereupon from the light produced by the light source; and a plurality of diffraction gratings formed on the deflecting surface, the plurality of diffraction gratings being arranged such that an $m^{th}$-order diffraction of the incident light is deflected in a direction substantially perpendicular to the deflecting surface, m being a non-zero integer.

The driving mirror may further be configured to vibrate while it rotates, the plurality of diffraction gratings being arranged to be substantially parallel to a rotational axis of the driving mirror, the incident light forming an angle $\beta$ with an optical axis of the scanning optical unit in a direction parallel to the main scanning line, an angle $\beta$ being greater than zero, the plurality of diffraction gratings arranged to satisfy: $p = m \cdot \lambda \cdot \sin\beta$, where p is the distance between adjacent ones of the plurality of diffraction gratings, $\lambda$ is the wavelength of the incident light. The $m^{th}$-order diffraction of the incident light may have a light intensity greater than that of any other order diffraction of incident light by the plurality of diffraction gratings.

## BRIEF DESCRIPTION OF THE DRAWINGS

Various features and advantages of the disclosure will become more apparent by the following detailed description of several embodiments thereof with reference to the attached drawings, of which:

FIG. 1 is a diagram showing a schematic structure of an optical deflector according to an embodiment;

FIG. 2 is a diagram showing a schematic structure of an optical deflector according to another embodiment;

FIGS. 3 and 4 are diagrams showing comparative examples of optical deflectors;

FIGS. 5 and 6 are diagrams showing light diffracted by gratings adopted by the optical deflectors shown in FIGS. 1 and 2, respectively;

FIG. 7 is a diagram showing a schematic structure of an optical deflector according to another embodiment;

FIG. 8 is a diagram showing a schematic structure of an optical deflector according to another embodiment;

FIG. 9 is a diagram showing a schematic structure of an optical deflector according to another embodiment;

FIG. 10A shows an optical configuration of an optical scanning apparatus according to an embodiment;

FIG. 10B shows a cross-sectional view of the optical scanning apparatus of FIG. 10A, taken along an optical axis;

FIG. 11 is a diagram showing an optical configuration of an optical scanning apparatus according to another embodiment; and

FIG. 12 is a diagram showing a schematic configuration of an image forming apparatus according to an embodiment.

## DETAILED DESCRIPTION OF SEVERAL EMBODIMENTS

Reference will now be made in detail to embodiments of the present invention, examples of which are illustrated in the accompanying drawings, wherein like reference numerals refer to like elements. While the embodiments are described with detailed construction and elements to assist in a comprehensive understanding of the various applications and advantages of the embodiments, it should be apparent however that the embodiments can be carried out without those specifically detailed particulars. Also, well-known functions or constructions will not be described in detail so as to avoid obscuring the description with unnecessary detail. It should be also noted that in the drawings, the dimensions of the features are not intended to be to true scale, and may be exaggerated for the sake of allowing greater understanding.

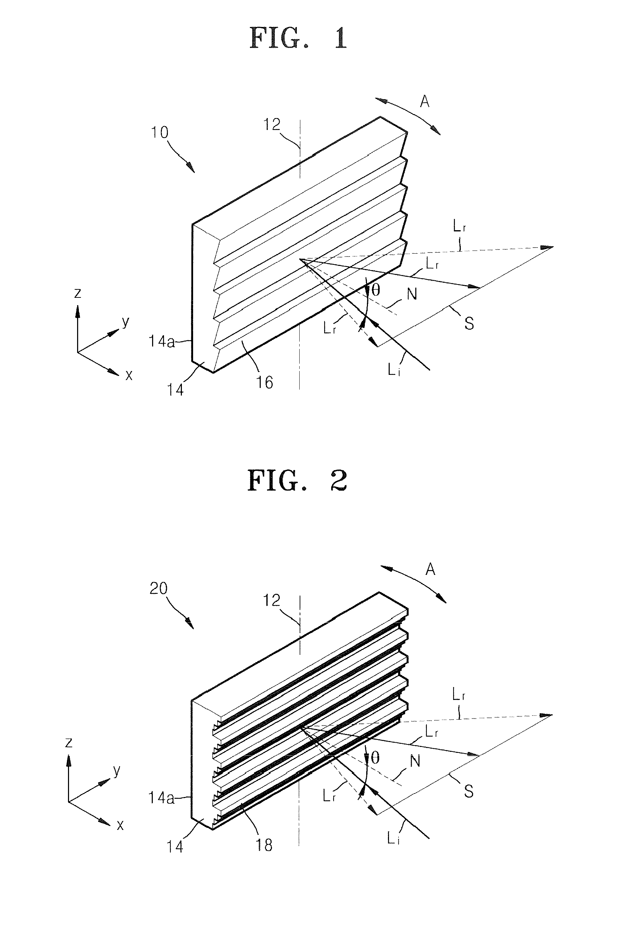

FIG. 1 is a diagram showing a schematic structure of an optical deflector 10 according to an embodiment. The optical deflector 10 deflects incident light, and may vibrate while pivoting about a rotary shaft 12 so that the deflected light forms a trace. The optical deflector 10 has a structure which makes a linear trace, such as a main scanning line S. The optical deflector 10 may include a driving mirror 14 that is rotated by a driver (not shown). Gratings 16 are formed on the surface of the driving mirror 14, i.e. the deflecting surface. Hereinafter, when discussing angles with respect to the deflecting surface, such deflecting surface refers to the surface before the gratings 16 are formed or otherwise without considering the gratings 16. Each grating 16 diffracts the incident light, and has, e.g., an asymmetrical shape, so as to allow the respective intensities of the light diffracted at a positive order and the light diffracted at a negative order to be different from one another. In particular, the shape of the gratings 16 is selected so as to increase the intensity of light diffracted at an order corresponding to a direction that is perpendicular to the deflecting surface. The lengthwise direction of the gratings 16 may be parallel to the main scanning line S, and the shape of the gratings 16 may be, for example, a blaze type, as shown in FIG. 1. However, the shape of the gratings 16 is not limited to the blaze type, and other shapes may be employed.

According to an embodiment, the driving mirror 14 may have a structure in which the gratings 16 are formed on a surface of a micro electro-mechanical systems (MEMS) mirror. The MEMS mirror may be, e.g., mass-produced with ultra-small size using a silicon substrate. The driver (not shown) may be an apparatus for pivoting and vibrating the driving mirror 14 using a magnetic driving method, an electrostatic driving method, an electromagnetic driving method, or the like. For example, when magnetic driving method is employed, a permanent magnet is attached on the surface 14a opposite the deflecting surface, on which the gratings 16 are formed. A time-varying magnetic field is formed on a portion where the permanent magnet is located by using a time-varying magnetic field generating apparatus, for example, an electromagnet, so that the driving mirror 14 is pivoted and vibrated according to a change of magnetic force caused by a change of the magnetic field. Various methods of driving the MEMS mirrors are well known to one of ordinary skill in the art, and thus, detailed descriptions for such various methods are unnecessary.

Referring to FIG. 1, an incident light Li is incident on the driving mirror 14 at an angle θ with respect to a line N normal to the deflecting surface, along the sub-scanning direction (Z), which is perpendicular to the main scanning line S. The normal line N is in a neutral position, which is a position of the central value within the range of the vibration of the optical deflector 10. The sub-scanning direction (Z) is a direction perpendicular to the main scanning direction (Y). Most of the incident light Li is diffracted and deflected by the gratings 16 at an order corresponding to the direction perpendicular to the deflecting surface. The driving mirror 14 is pivoted about the pivot axis 12, and is vibrated in a direction A, by a driver or drivers(not shown). Consequently, the trace of the deflected light Lr forms the main scanning line S. That is, the light incident, Li, on the driving mirror 14 is deflected in different directions since the driving mirror 14 is pivoted and vibrated. When the deflected light Lr is focused on a focusing surface (not shown), the trace formed by the optical spot along the deflected direction forms the main scanning line S. The main scanning line S may be a straight line as shown in FIG. 1.

FIG. 2 is a diagram showing a schematic structure of an optical deflector 20 according to another embodiment. The optical deflector 20 differs from the optical deflector 10 shown in FIG. 1 in the shape of gratings 18. Each grating 18 has an asymmetrical shape to allow the intensities of the light diffracted at the positive order and the light diffracted at the negative order to be different from each other. In particular, the shape of each grating 18 is selected so that the intensity of the light diffracted at an order corresponding to the direction that is perpendicular to the deflecting surface increases. For example, a length direction of the gratings 18 may be parallel with the main scanning line S, and each grating 18 may be formed in a step shape.

When the light Li is incident on the driving mirror 14 in a direction perpendicular to the main scanning line S, and forming an angle θ with the normal line N of the deflecting surface in the sub-scanning direction Z, most of the incident light Li is diffracted and deflected by the gratings 18 at an order corresponding to the direction perpendicular to the deflecting surface. As the driving mirror 14 is vibrated while pivoting about the rotary shaft 12, the trace of the deflected light Lr forms the straight line of the main scanning line S.

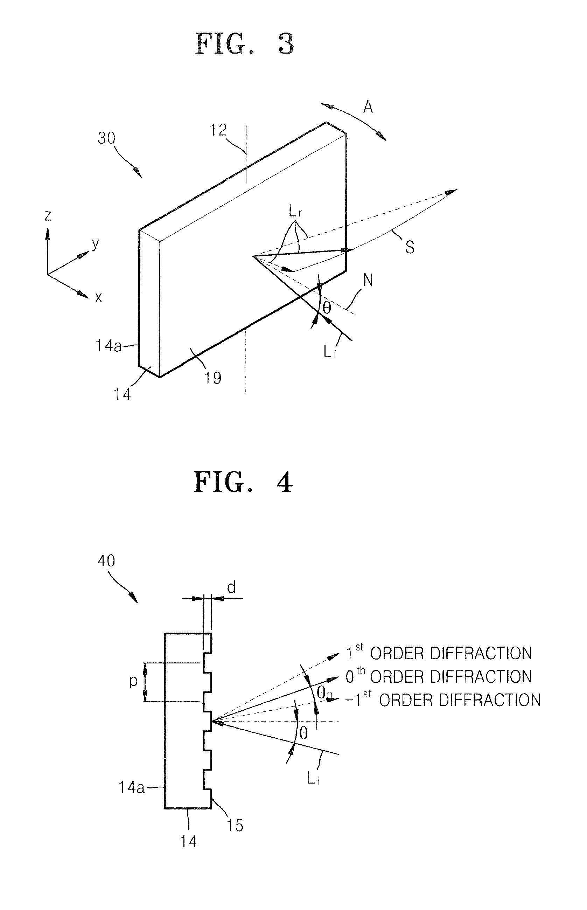

An example of the determination of the shapes of the gratings 16 and 18, respectively shown in FIGS. 1 and 2, will be described with reference to FIGS. 3-6.

FIG. 3 shows an optical deflector 30, on which gratings are not formed, as a comparative example with the optical deflectors 10 and 20. When the light Li is incident at an angle θ with respect to the normal line N of the deflecting surface 19, the incident light Li is reflected at the same angle θ as that of the incident angle θ. Since the optical deflector 30 is vibrated while pivoting about the rotary shaft 12, the trace of the light reflected by the optical deflector 30 forms a curve S. In this case, the trace on the focusing surface (not shown) is also the curve S, and accordingly, an additional optical structure for compensating for the curvature may be required, which may increase the complexity of an optical system that incorporates the optical deflector 30.

As shown in FIG. 4, gratings may be formed on the deflecting surface 19 so that the trace of the reflected light is not in the shape of a curve. FIG. 4 shows an optical deflector 40, on which gratings 15 of a binary type are formed, as a comparative example with the optical deflectors 10 and 20. A light Li incident at an incident angle θ is diffracted in various directions. The light diffracted in 0th order has a diffraction angle that is the same as the incident angle θ, and the lights diffracted in ±1st orders are diffracted at angles $\theta_D$ with respect to the 0th order diffracted light.

The diffraction angle $\theta_D$ is determined by the following Equation 1 according to the pitch (p) of adjacent gratings 15 and the wavelength (λ) of the incident light Li.

$$\pm m \cdot \lambda = p \cdot \sin(\theta_D)$$

where m denotes the diffraction order.

Therefore, if the pitch (p) of adjacent gratings 15 is set to have an appropriate value, the light diffracted in a certain order can be reflected in a direction substantially perpendicular to the driving mirror 14. For example, if the pitch (p) is set as p=λ/sinθ, the light diffracted in the -1st order is directed perpendicularly to the surface 14a.

The intensities of the diffracted light may be determined by the depth d of the gratings 15. As shown in FIG. 4, when the gratings 15 are the binary type, the intensities of the lights diffracted at the +mth order and at the -mth order are equal to each other, and in this case, the intensity of the light diffracted at the desired order may not exceed 50%.

Incorporation of the gratings that make the intensities of light diffracted at the positive order and the negative order different from each other may improve an optical efficiency by making most of the incident light diffracted at a certain order.

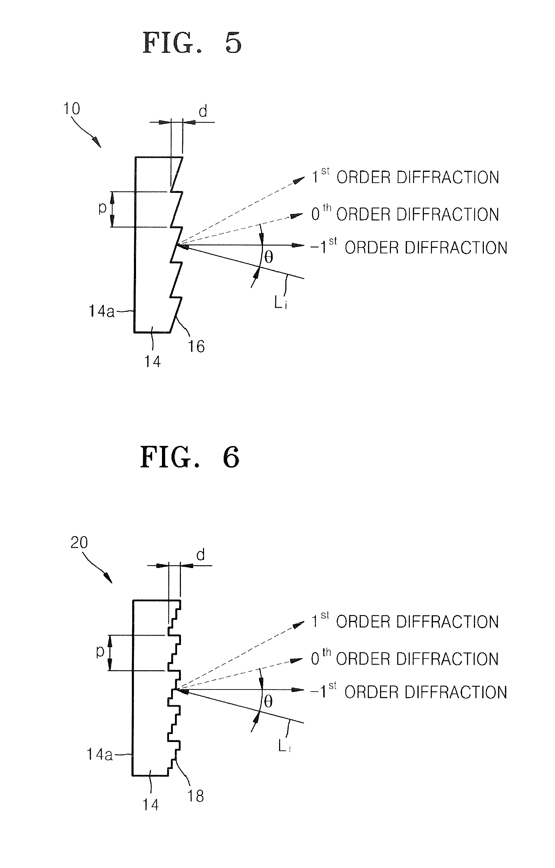

FIG. 5 illustrates the lights diffracted by the gratings 16 adopted by the optical deflector 10 shown in FIG. 1. A pitch p of adjacent blaze type gratings 16 is adjusted so that the light diffracted at the -1st order is substantially perpendicular to the driving mirror 14, and the depth d of the gratings 16 is adjusted to improve the efficiency of the light diffracted at the -1st order. With the above described configuration, most of the light Li incident on the deflecting surface of the driving mirror 14 at the incident angle θ may be made to be diffracted at the -1st order, i.e., in a direction perpendicular to the deflecting surface.

FIG. 6 illustrates the lights diffracted by the gratings 18 adopted by the optical deflector 20 shown in FIG. 2, according to an embodiment. A pitch p of adjacent step type gratings 18 is adjusted so that the light diffracted at the -1st order is substantially perpendicular to the driving mirror 14, and the depth d of the gratings 18 and the number of steps are adjusted to improve the optical efficiency of the light diffracted at the -1st order. Most of the light Li incident on the driving mirror 14 at an incident angle θ may be made to be diffracted at the -1st order, i.e., in a direction perpendicular to the deflecting surface. For example, for each grating 18 having four steps, when the depth of each step is (n+0.75)×(λ/2), where n is an integer of 1 or greater, the optical efficiency of the light diffracted at the -1st order is about 81%.

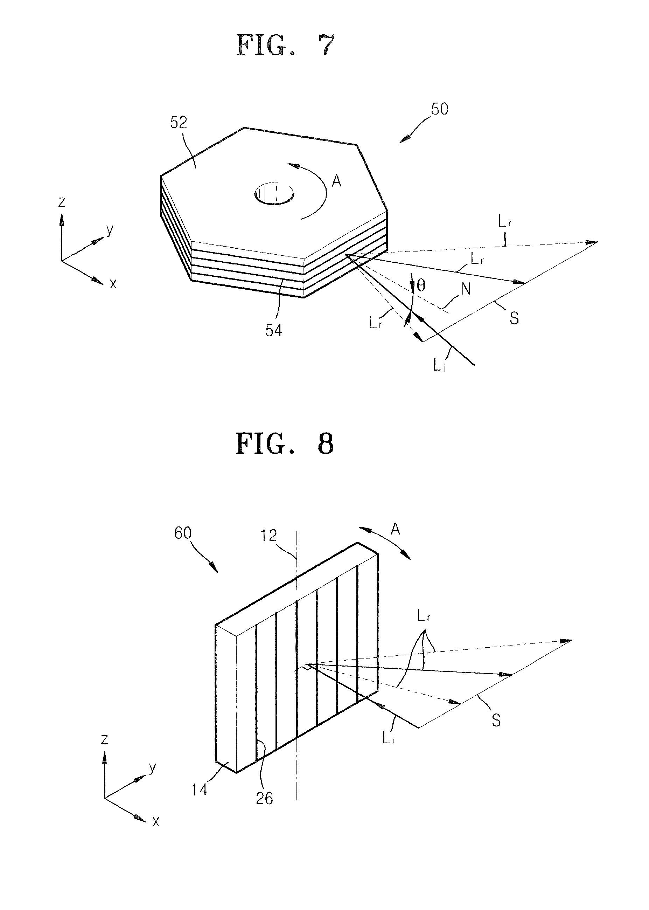

FIG. 7 is a diagram showing a schematic structure of an optical deflector 50 according to another embodiment. The optical deflector 50 includes a polygon mirror 52 having a plurality of deflecting surfaces and gratings 54 respectively formed on the plurality of deflecting surfaces. The optical deflector 50 differs from the optical deflectors 10 and 20, respectively shown in FIGS. 1 and 2, in that the polygon mirror 52 is used as the driving mirror 14. However, the shape of the gratings 54 may be selected so as to increase the intensity of light diffracted at the order corresponding to the direction perpendicular to the deflecting surface, similar to the optical deflectors 10 and 20, and as described above. That is, the lengthwise direction of the gratings 54 may be parallel to the direction of the main scanning line S, and the shape of each grating 54 may be the blaze type shown in FIG. 1 or the step type shown in FIG. 2, for example. When the light Li is incident on the polygon mirror 52 at an angle θ in the sub-scanning direction Z with respect to a normal line N of the deflecting surface, which is in neutralized position, and perpendicular to the main scanning line S, most of the incident light Li is diffracted by the grating 54 at the order corresponding to a direction perpendicular to the deflecting surface. The polygon mirror 52 is mounted on a spindle motor (not shown) and rotates in a direction denoted by the arrow A, and accordingly, the trace of the deflected light Lr forms the straight line of the main scanning line S.

The light Li is incident on the deflecting surface in a direction that is perpendicular to the main scanning direction Y and forms an angle θ (θ≠0) in the sub-scanning direction Z with a normal line N of the deflecting surface. The light Lr deflected by the optical deflector 50 is perpendicular to the deflecting surface, and thus, the incident light Li and the deflected light Lr are on different planes. The maximum angle formed between the incident light Li and the deflecting surface in the main scanning direction Y, according to the vibration or the rotation of the optical deflector, need not exceed about α/2, where α is a unilateral scanning angle, and the maximum length of the deflecting surface in the main scanning direction Y need not exceed about D/cos(α/2), where D is a beam diameter of the incident light. The unilateral scanning angle α refers to a half of the angle formed by the optical beams, which are deflected by the optical deflector 50 toward both ends of the main scanning line S, when the main scanning line S of a predetermined length range is formed by the optical deflector 50. With the above described various configurations, the size of the deflecting surface can be formed to be smaller than that of a conventional optical deflector, which requires a deflecting surface having a length of D/cos(α) or greater, and for which the incident light Li and the deflected light Lr are on the same plane.

FIG. 8 is a diagram showing a schematic structure of an optical deflector 60 according to another embodiment. The optical deflector 60 may include the driving mirror 14 and gratings 26 formed on a deflecting surface of the driving mirror 14. Each grating 26 is formed so that the lengthwise direction of each grating 26 is perpendicular to the main scanning line S, and the shape of each grating 26 is selected under the same principles as those of the previous embodiments. That is, the shape of each grating 26 is selected so that the optical efficiency of the light diffracted at a certain order is improved, and the shape may be the blaze type or the step type, for example. The pitch of adjacent blaze type gratings or step type gratings, the depth of blaze type gratings or step type gratings, or the number of steps of the step type gratings may be adjusted appropriately to increase the intensity of the light diffracted at the desired order.

Referring to FIG. 8, the incident light Li is incident perpendicular to the deflecting surface when the optical deflector 60 is in the neutralized position. Here, the neutralized position means that the optical deflector 60 is at a position of a central value within the range of vibration of the optical deflector 60. When the gratings 26 are not formed, the incident light is reflected at the same direction as the incident direction. However, since the gratings 26 are formed on the deflecting surface, the incident light Li is deflected in a direction along the main scanning line S. In addition, the trace of the light deflected forms the straight line of the main scanning line S, according to the vibration of the optical deflector 60.

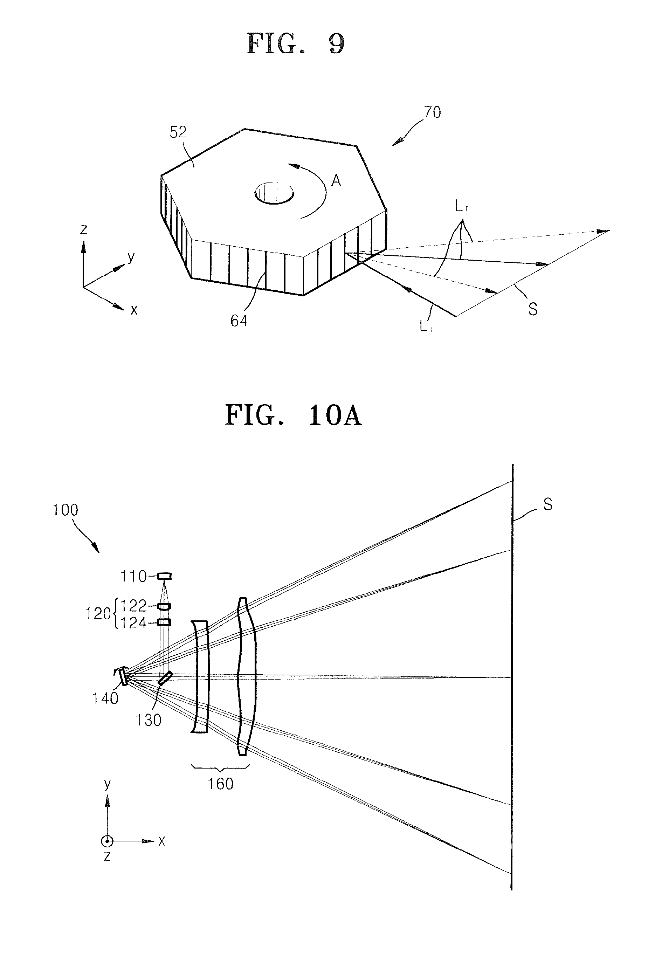

FIG. 9 is a diagram showing a schematic structure of an optical deflector 70 according to another embodiment. The optical deflector 70 includes the polygon mirror 52 having a plurality of deflecting surfaces with gratings 64 formed on the plurality of deflecting surfaces. The optical deflector 70 of the current embodiment is different from the optical deflector 60 shown in FIG. 8 in that the polygon mirror 52 is used as the driving mirror. However, the gratings 64 are also selected to improve the optical efficiency of the light diffracted at a certain order, similarly with the optical deflector 60 of FIG. 8. That is, the gratings 64 are formed so that the lengthwise direction of each grating 64 is perpendicular to the main scanning line S, and the shape of each grating 64 may be the blaze type or the step type, for example, although other grating shapes may be utilized. The incident light Li that is perpendicularly incident on the deflecting surface is deflected by the grating 64 in a direction along the main scanning line S. In addition, a trace of the deflected light Lr forms the straight line of the main scanning line S, according to the vibration of the optical deflector 70.

Since the optical deflectors 60 and 70 of FIGS. 8 and 9, respectively, have optical arrangements in which the incident light Li and the deflected light Lr are on the same plane, the optical deflectors 60 and 70 may advantageously be used with the existing optical arrangements of a conventional optical scanning apparatus or an image forming apparatus. In addition, owing to the gratings formed in the deflecting surface, the optical arrangements may be configured so that the light is incident perpendicularly onto the deflecting surface when the deflecting surface is in the neutralized position. Thus, the incident angle of light on the deflecting surface when the deflecting surface is being pivoted may be reduced and the size of the deflecting surface may also be reduced.

The above-described optical deflectors have gratings on the deflecting surfaces, where the gratings are formed to increase the efficiency of the light diffracted at a certain order. The optical deflectors are not limited to a certain number of deflecting surfaces or a driving method of the deflecting surface. Further, the above characteristics can be applied, e.g., to an optical deflector including a galvanometer mirror, and thus the application of the characteristics are not limited only to the above described MEMS mirror or the polygon mirror 52.

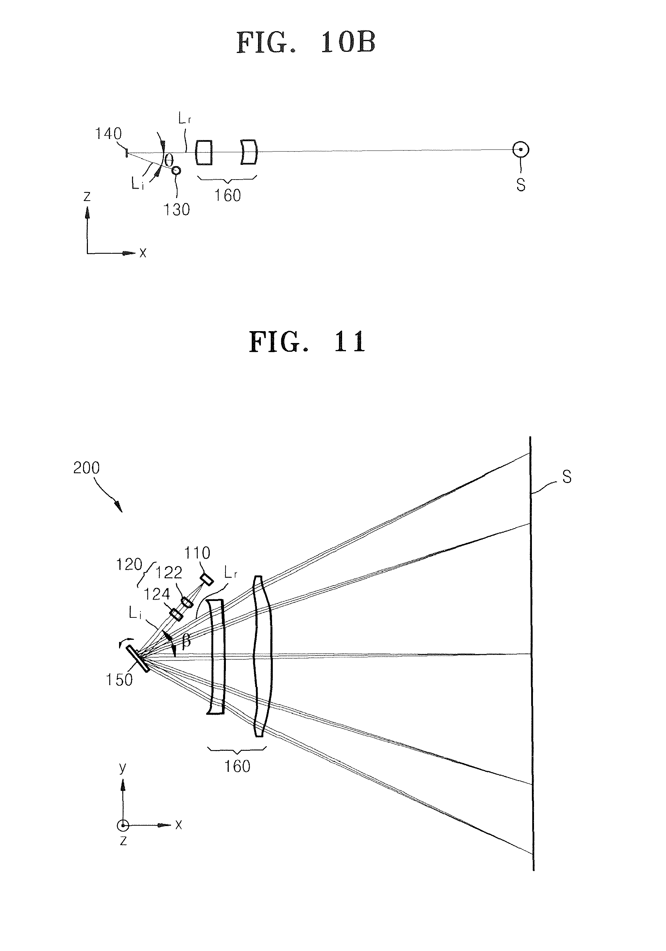

FIG. 10A shows an optical configuration of an optical scanning apparatus 100, and FIG. 10B shows a cross-sectional view of the optical scanning apparatus 100, taken along the optical axis. Referring to FIGS. 10A and 10B, the optical scanning apparatus 100 may include a light source 110 and an optical deflector 140, and may further include a pre-scan optical unit 120 and a scanning optical unit 160. An optical path conversion member 130 may also be disposed between the pre-scan optical unit 120 and the optical deflector 140.

The light source 110 is turned on/off by a controller (not shown) to generate and irradiate the light corresponding to an image signal onto a portion of an exposure object, on which, e.g., an electrostatic latent image will be formed. The light source 110 may be formed of an edge emitting diode, a vertical cavity surface emitting laser (VCSEL), or a light emitting device (LED), for example, without limitation.

The pre-scan optical unit 120 shapes the beam emitted from the light source 110. The pre-scan optical unit 120 may include, for example, a collimating lens 122 for shaping the beam as a parallel light or a convergent light and a cylindrical lens 124 for focusing the beam shaped by the collimating lens 122 in the sub-scanning direction (Z direction).

The optical path conversion member 130 converts the optical path so that the light emitted from the pre-scan optical unit 120 proceeds toward, and, is then incident on the optical deflector 140. While passing through the optical path conversion member 130, the optical path of the light is converted to be perpendicular to the direction of the main scanning line S, and to form an angle θ with the normal line N of the deflecting surface of the optical deflector 140 in the sub-scanning direction. The optical path conversion member 130 is described only as an illustrative example of the implementation of the optical scanning apparatus, and is not a necessary inclusion to the optical scanning apparatus 100. For example, the light source 110 and/or the pre-scan optical unit 120 may be arranged so that the light emitted from the light source 110 is directly incident onto the optical deflector 140 at the above described incident angle without passing through the optical path conversion member 130.

The optical deflector 140 includes the deflecting surface that is rotated, and deflects the beam shaped by the pre-scan optical unit 120. The optical deflector 10, 20, or 50, respectively shown in FIGS. 1, 2, and 7, may be used as the optical deflector 140. As described above, the light that is incident onto the deflecting surface in a direction perpendicular to the main scanning direction and in the sub-scanning direction at an angle θ (θ≠0) with the normal line of the deflecting surface which is in the neutralized position, is deflected by the optical deflector 140 in a direction perpendicular to the deflecting surface. In addition, the trace of the light deflected by the optical deflector 140 forms the main scanning line S on the exposure object (not shown) according to the vibration of the optical deflector 140.

The scanning optical unit 160 may adopt an f-θ lens, for example, to compensate for the light deflected by the optical deflector 140 with different magnification in the main scanning direction (Y direction) and the sub-scanning direction (Z direction) so as to focus the deflected light Lr on the exposure object. The f-θ lens may include at least one plastic aspherical lens, but is not limited to the number of lenses and shapes shown in the drawings.

A synchronization detecting sensor or a focusing mirror may further be disposed between the scanning optical unit 160 and the exposed object on which the main scanning line S is formed. The synchronization detecting sensor generates a synchronization signal for synchronizing the main scanning direction, and the focusing mirror converts the optical path of the light passing the scanning optical unit 160 so that the light proceeds to the exposure object.

FIG. 11 shows an optical configuration of an optical scanning apparatus 200 according to another embodiment. The optical scanning apparatus 200 may include the light source 110, the pre-scan optical unit 120, an optical deflector 150, and the scanning optical unit 160. The optical scanning apparatus 200 differs from the optical scanning apparatus 100 of FIG. 10 in that the incident light Li onto the optical deflector 150 and the light Lr deflected by the optical deflector 150 are on the same plane. Accordingly, the optical deflectors 60 and 70, respectively described with reference to FIGS. 8 and 9, may be used as the optical deflector 150. The incident light Li is perpendicular to the deflecting surface of the optical deflector 150 in the neutralized position, and forms an angle β (β≠0) with an optical axis of the scanning optical unit 160. The angle β may be greater than the unilateral scanning angle α. A pitch p of adjacent gratings formed in the deflecting surface of the optical deflector 150 may be determined by an equation p=m·λ·sinβ, where the diffraction order is m. As described above, the gratings formed on the deflecting surface of the optical deflector 150 deflect the light that is perpendicularly incident onto the deflecting surface of the optical deflector 150 in the direction of the optical axis of the scanning optical unit 160.

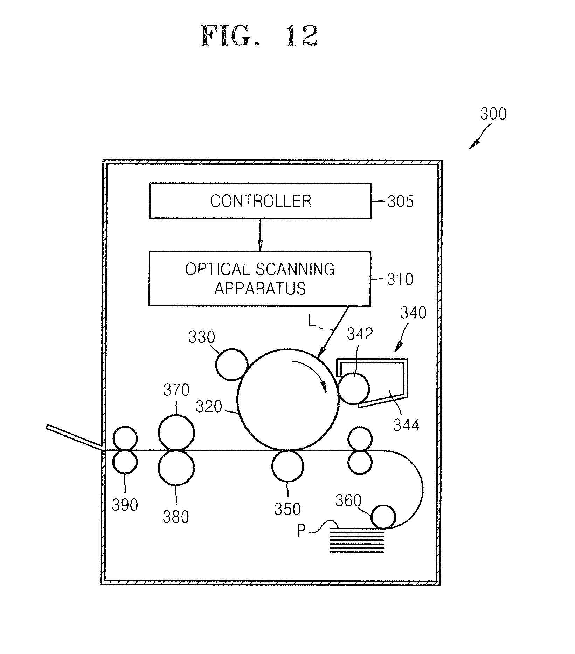

FIG. 12 is a diagram showing a schematic configuration of an image forming apparatus 300 according to an embodiment. The image forming apparatus 300 may include a photosensitive drum 320, an optical scanning apparatus 310 that irradiates the light onto the photosensitive drum 320 to form an electrostatic latent image thereon, and a developing unit 340 supplying toner to the electrostatic latent image formed on the photosensitive drum 320 so as to develop the electrostatic latent image on the photosensitive drum 320.

The photosensitive drum 320 is only an example of a photosensitive member, which may be any other shapes and/or configuration, and is, e.g., fabricated by forming a photosensitive layer of a predetermined thickness on an outer circumferential surface of a cylindrical metal pipe. A charging bias is applied to a charging roller 330, and the charging roller 330 charges the surface of the photosensitive drum 320 to a uniform electric potential by, e.g., rotationally contacting the photosensitive drum 320. The optical scanning apparatus 310 is controlled by a controller 305, and irradiates light L, which is modulated according to image information, onto the photosensitive drum 320 that is charged to have the uniform electric potential to form the electrostatic latent image on the photosensitive drum 320. The optical scanning apparatus 100 and 200, respectively described with reference to FIGS. 9 and 10, may, for example, be used as the optical scanning apparatus 310. The developing unit 340 may include a developing roller 342 and a toner container 344. The toner contained in the toner container 344 may be attached onto the developing roller 342, and may be transferred to a developing nip on which the photosensitive drum 320 and the developing roller 342 face each other. Then, the toner is attached onto the electrostatic latent image formed on the photosensitive drum 320 by a developing bias applied to the developing roller 342. A transfer bias may be applied to the transfer roller 350 that faces the photosensitive drum 320. A feeding roller 360 conveys a recording medium, for example, a sheet of paper P, to a transfer nip where the transfer roller 350 and the photosensitive drum 320 face each other. The toner image attached onto the photosensitive drum 320 is transferred to the paper P by, e.g., an electrostatic attraction of the transfer bias that is applied to the transfer roller 350. The toner image transferred onto the paper P is fused on the paper P by heat and pressure applied from a fusing roller 370 and a pressure roller 380, and then, the printing operation is finished. The paper P exits the image forming apparatus 300 via an exit roller 390.

While the disclosure has been particularly shown and described with reference to several embodiments thereof with particular details, it will be apparent to one of ordinary skill in the art that various changes may be made to these embodiments without departing from the principles of the invention, the scope of which is defined in the following claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An optical deflector, comprising:

   a driving mirror (14) configured to rotate, the driving mirror (14) having a deflecting surface for deflecting an incident light; and
   a plurality of gratings (16) formed on the deflecting surface for diffracting the incident light, each of the one or more gratings (16) having a shape such that respective intensities of light diffracted at a positive order and a negative order are different from each other,

   wherein a main scanning line (S) formed by a trace of light deflected by the driving mirror (14) as the driving mirror (14) rotates is substantially a straight line.

2. The optical deflector of claim 1, wherein a lengthwise direction of each of the plurality of gratings (16) is parallel to the main scanning line (S).

3. The optical deflector of claim 1, wherein a lengthwise direction of each of the plurality of gratings (16) is perpendicular to the main scanning line (S).

4. The optical deflector of any one of claims 1 to 3, wherein the plurality of gratings (16) comprise at least one of blaze type gratings and step type gratings.

5. The optical deflector of any one of claims 1 to 4, wherein the driving mirror (14) comprises a micro electro-mechanical systems (MEMS) mirror.

6. The optical deflector of any one of claims 1 to 4, wherein the driving mirror (14) comprises a polygon mirror having a plurality of deflecting surfaces, wherein the plurality of gratings (16) are formed on each of the plurality of deflecting surfaces.

7. An optical scanning apparatus, comprising:

   a light source configured to produce light; and
   an optical deflector (20) including a deflecting surface, the optical deflector (20) being rotatably driven to deflect the light received from the light source,

   wherein the optical deflector (20), comprising:

   a driving mirror (14) configured to rotate, the driving mirror (14) having a deflecting surface for deflecting an incident light; and
   a plurality of gratings (16) formed on the deflecting surface for diffracting the incident light, each of the one or more gratings (16) having a shape such that respective intensities of light diffracted at a positive order and a negative order are different from each other,

   wherein a main scanning line (S) formed by a trace of light deflected by the driving mirror (14) as the driving mirror (14) rotates is substantially a straight line.

8. The optical scanning apparatus of claim 7, wherein the light incident on the deflecting surface from the light source

   (i) is perpendicular to a main scanning line (S) that is formed by a trace of the light deflected by the optical deflector (20) as the optical deflector (20) rotates, and
   (ii) forms an angle $\theta$ ($\theta \neq 0$), along a sub-scanning direction perpendicular to the main scanning line (S), with a line (N) normal to the deflecting surface when the deflecting surface is in a neutralized position, the main scanning line (S) being substantially a straight line.

9. The optical scanning apparatus of claim 8, wherein a lengthwise direction of the gratings (16) is in parallel with the main scanning line (S).

10. An optical scanning apparatus of claim 7, wherein the light incident on the deflecting surface is parallel to a line (N) normal to the deflecting surface when the deflecting surface is in a neutralized position, the light incident on the deflecting surface forming an angle β (β≠0) with an optical axis of the scanning optical unit (160).

**11.** The optical scanning apparatus of claim 10, wherein a lengthwise direction of the gratings (16) is perpendicular to the main scanning line (S).

**12.** The optical scanning apparatus of any one of claims 7 to 11, further comprising:

a pre-scan optical unit (120) arranged to receive the light from the light source, the pre-scan optical unit (120) being configured to shape the light received from the light source into a predetermined shape;
an optical deflector (20) including a deflecting surface that is rotatably driven, the optical deflector (20) being configured to deflect the light received from the pre-scan optical unit (120); and
a scanning optical unit (160) arranged to receive the deflected light from the optical deflector (20), the scanning optical unit (160) being configured to compensate for an aberration of the light deflected by the optical deflector (20) so as to focus the light onto an exposure object.

**13.** The optical scanning apparatus of any one of the claims 7 to12, wherein the gratings (16) are one of blaze type gratings and step type gratings.

**14.** The optical scanning apparatus of any one of claims 7 to 13, wherein the optical deflector (20) comprises any one of a micro electro-mechanical systems (MEMS) mirror device, a polygon mirror device and a galvanometer mirror device.

**15.** An image forming apparatus, comprising:

a photosensitive object (320);
an optical scanning apparatus (310) any one of claims 7 to 14, for irradiating light onto the photosensitive object (320) to form an electrostatic latent image;
a developing unit (340) supplying toner to the electrostatic latent image formed on the photosensitive object (320) so as to develop the electrostatic latent image on the photosensitive object (320).

# FIG. 1

# FIG. 2

# FIG. 3

# FIG. 4

1<sup>st</sup> ORDER DIFFRACTION

0<sup>th</sup> ORDER DIFFRACTION

−1<sup>st</sup> ORDER DIFFRACTION

# FIG. 5

10

d

1$^{st}$ ORDER DIFFRACTION

0$^{th}$ ORDER DIFFRACTION

−1$^{st}$ ORDER DIFFRACTION

p

θ

L$_i$

14a

14

16

# FIG. 6

20

d

1$^{st}$ ORDER DIFFRACTION

0$^{th}$ ORDER DIFFRACTION

−1$^{st}$ ORDER DIFFRACTION

p

θ

L$_i$

14a

14

18

# FIG. 7

# FIG. 8

# FIG. 9

# FIG. 10A

# FIG. 10B

# FIG. 11

# FIG. 12

300

| CONTROLLER | —305 |

| OPTICAL SCANNING APPARATUS | —310 |

L

330

340

342

320

370

344

390    380    350    360

P